# EUROPEAN PATENT SPECIFICATION

(11) **EP 3 916 021 B1**
(45) Date of publication and mention of the grant of the patent: **26.11.2025**
(21) Application number: 20744991.9
(22) Date of filing: 15.01.2020
(51) Int. Cl.: C08C 1/15, C08F 6/22

(54) **METHOD FOR PRODUCING CARBOXYL GROUP-CONTAINING LIQUID NITRILE RUBBER**
VERFAHREN ZUR HERSTELLUNG VON CARBOXYLGRUPPENHALTIGEM FLÜSSIGEM NITRILKAUTSCHUK
PROCÉDÉ DE FABRICATION DE CAOUTCHOUC NITRILE LIQUIDE COMPRENANT UN GROUPE CARBOXYLE

(30) Priority: 21.01.2019 JP 2019007919
(43) Date of publication of application: 01.12.2021
(73) Proprietor: Zeon Corporation, Tokyo 100-8246 (JP)
(72) Inventor: SHIONO, Atsuhiro, Tokyo 100-8246 (JP)
(74) Representative: Maiwald GmbH
(86) International application number: PCT/JP2020/000992
(87) International publication number: WO 2020/153183

(56) References cited:
- WO-A1-2007/049651
- WO-A1-2018/123737
- JP-A- 2004 285 293
- JP-A- S4 742 853
- US-A- 2 937 164

## Description

### TECHNICAL FIELD

The present invention relates to a method for producing a carboxyl group-containing liquid nitrile rubber, and more specifically relates to a method for producing a carboxyl group-containing liquid nitrile rubber which enables production of a carboxyl group-containing liquid nitrile rubber which has high storage stability and can ensure an ability to provide high surface smoothness for an adhesive material for a flexible print circuit substrate prepared by mixing with an adhesive polymer.

### BACKGROUND ART

Liquid diene rubbers such as liquid nitrile rubbers are used as a main component of coating materials, primers, and adhesives, or are used as co-cross-linkable plasticizers by compounding these with solid rubbers.

For example, Patent Document 1 discloses an oil-resistant rubber composition comprising a liquid nitrile rubber containing methacrylate units as carboxyl group-containing monomer units, and a solid nitrile rubber. Patent Document 2 discloses a liquid nitrile rubber with methacrylate units polymerized at a pH of 4 in the polymerization system.

### RELATED ART DOCUMENTS

### PATENT DOCUMENT

Patent Document 1: JP-B S50-27486
Patent Document 2: US 2,937,164 A

### SUMMARY OF THE INVENTION

### PROBLEM TO BE SOLVED BY THE INVENTION

However, traditional liquid nitrile rubbers such as the liquid nitrile rubber disclosed in Patent Document 1 above have insufficient stability during storage, which undesirably increases the viscosity after storage for a predetermined period. Such an increased viscosity thereof results in compounds having unstable properties when these liquid nitrile rubbers are compounded with a solid rubber, a resin, or the like.

The present invention has been made in consideration of such circumstances. An object of the present invention is to provide a method for producing a carboxyl group-containing liquid nitrile rubber, the method enabling production of a carboxyl group-containing liquid nitrile rubber which has high stability during storage and can ensure the ability to provide high surface smoothness for an adhesive material for a flexible print circuit substrate prepared by mixing with an adhesive polymer.

### MEANS FOR SOLVING THE PROBLEM

The present inventors, who have conducted extensive research to achieve the above object, have found that the object can be achieved by separating a carboxyl group-containing liquid nitrile rubber from a latex of the carboxyl group-containing liquid nitrile rubber by bringing the carboxyl group-containing liquid nitrile rubber into contact with a mono- or divalent metal salt under a condition at a pH of 5 or less to salt out the carboxyl group-containing liquid nitrile rubber, and have completed the present invention.

In other words, the present invention provides a method for producing a carboxyl group-containing liquid nitrile rubber, the method comprising bringing a latex of a carboxyl group-containing liquid nitrile rubber into contact with a mono- or divalent metal salt under a condition at a pH of 5 or less to salt out and separate the carboxyl group-containing liquid nitrile rubber from an aqueous phase, wherein a mixture prepared by contacting of the latex of the carboxyl group-containing liquid nitrile rubber and the mono- or divalent metal salt has a pH of 5 or less.

In the production method according to the present invention, the carboxyl group-containing liquid nitrile rubber preferably contains 1 to 20 wt% of carboxyl group-containing monomer units.

In the production method according to the present invention, the carboxyl group-containing liquid nitrile rubber preferably contains 10 to 59 wt% of α,β-ethylenically unsaturated nitrile monomer units.

In the production method according to the present invention, the carboxyl group-containing liquid nitrile rubber preferably contains 40 to 89 wt% of conjugated diene monomer units.

In the production method according to the present invention, the mono- or divalent metal salt is preferably a mono- or divalent metal salt of an inorganic acid.

In the production method according to the present invention, the mono- or divalent metal salt is a divalent metal salt, and the amount of the divalent metal salt to be used is 1 to 10 parts by weight relative to 100 parts by weight of the carboxyl group-containing liquid nitrile rubber contained in the latex of a carboxyl group-containing liquid nitrile rubber. In the production method according to the present invention, the carboxyl group-containing liquid nitrile rubber is preferably salted out by bringing the latex of a carboxyl group-containing liquid nitrile rubber into contact with an aqueous solution containing the mono- or divalent metal salt under the condition at a pH of 5 or less.

In the production method according to the present invention, the content of the mono- or divalent metal salt in the aqueous solution containing the mono- or divalent metal salt is preferably 1 to 10 wt%.

### EFFECTS OF INVENTION

The method according to the present invention enables production of a carboxyl group-containing liquid nitrile rubber which has high stability during storage and can ensure an ability to provide high surface smoothness for an adhesive material for a flexible print circuit substrate prepared by mixing with an adhesive polymer.

### DESCRIPTION OF EMBODIMENTS

The method for producing a carboxyl group-containing liquid nitrile rubber according to the present invention comprises bringing a latex of a carboxyl group-containing liquid nitrile rubber into contact with a mono- or divalent metal salt under a condition at a pH of 5 or less to salt out and separate the carboxyl group-containing liquid nitrile rubber from an aqueous phase.

### <Latex of carboxyl group-containing liquid nitrile rubber>

First of all, the latex of a carboxyl group-containing liquid nitrile rubber used in the present invention will be described.

The latex of a carboxyl group-containing liquid nitrile rubber used in the present invention is a dispersion of a carboxyl group-containing liquid nitrile rubber in water.

The carboxyl group-containing liquid nitrile rubber contained in the latex of a carboxyl group-containing liquid nitrile rubber is a carboxyl group-containing nitrile rubber which is liquid at 25°C (which has fluidity at 25°C). For example, the carboxyl group-containing liquid nitrile rubber has a Mooney viscosity of usually 1 or less, which is determined according to JIS K6300, or has an unmeasurable Mooney viscosity due to its excessively low viscosity.

Examples of the carboxyl group-containing liquid nitrile rubber contained in the latex of a carboxyl group-containing liquid nitrile rubber include liquid rubbers which can be prepared by copolymerization of an α,β-ethylenically unsaturated nitrile monomer, a carboxyl group-containing monomer, and an optional monomer which is copolymerizable with these monomers.

Although any α,β-ethylenically unsaturated nitrile monomer can be used, preferred are those having 3 to 18 carbon atoms, and particularly preferred are those having 3 to 9 carbon atoms. Specific examples thereof include acrylonitrile, methacrylonitrile, α-chloroacrylonitrile, and the like. Among these, acrylonitrile is preferred. These α,β-ethylenically unsaturated nitrile monomers may be used alone or in combination.

The content of the α,β-ethylenically unsaturated nitrile monomer units in the carboxyl group-containing liquid nitrile rubber is preferably 10 to 59 wt%, more preferably 13 to 53 wt%, still more preferably 17 to 47 wt%. By controlling the content of the α,β-ethylenically unsaturated nitrile monomer units within this range, solvent resistance and cold resistance can be well-balanced and excellent.

The carboxyl group-containing monomer can be any carboxyl group-containing monomer as long as the monomer is copolymerizable with the α,β-ethylenically unsaturated nitrile monomer and has one or more unsubstituted (free) carboxyl groups not subjected to esterification or the like. Use of the carboxyl group-containing monomer can introduce a carboxyl group into a liquid nitrile rubber, thereby enhancing solvent resistance and adhesiveness of an adhesive material prepared by compounding the liquid nitril rubber with an adhesive polymer such as a resin or a solid rubber.

Examples of the carboxyl group-containing monomer used in the present invention include α,β-ethylenically unsaturated monocarboxylic acid monomers, α,β-ethylenically unsaturated polyvalent carboxylic acid monomers, α,β-ethylenically unsaturated dicarboxylic acid mono ester monomers, and the like. The carboxyl group-containing monomers also include those having carboxyl groups in the form of carboxylic acid salts. Moreover, anhydrides of the α,β-ethylenically unsaturated polyvalent carboxylic acids can also be used as the carboxyl group-containing monomer because their acid anhydride groups can be cleaved to form carboxyl groups after copolymerization.

Examples of the α,β-ethylenically unsaturated monocarboxylic acid monomers include acrylic acid, methacrylic acid, ethylacrylic acid, crotonic acid, cinnamic acid, and the like.

Examples of the α,β-ethylenically unsaturated polyvalent carboxylic acid monomers include butenedioic acids such as fumaric acid and maleic acid, itaconic acid, citraconic acid, mesaconic acid, glutaconic acid, allylmalonic acid, teraconic acid, and the like. Examples of the anhydrides of the α,β-unsaturated polyvalent carboxylic acid include maleic anhydride, itaconic anhydride, citraconic anhydride, and the like.

Examples of the α,β-ethylenically unsaturated dicarboxylic acid monoester monomers include maleic acid monoalkyl esters such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleate; maleic acid monoalkyl cycloalkyl esters such as monomethyl cyclopentyl maleate and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate, and monoethyl cyclohexyl itaconate; and the like.

These carboxyl group-containing monomers may be used alone or in combination. Among these, preferred are α,β-ethylenically unsaturated monocarboxylic acid monomers, preferred is acrylic acid or methacrylic acid, and more preferred is methacrylic acid because these monomers provide a more remarkable effect of introducing a carboxyl group into the liquid nitrile rubber.

The content of the carboxyl group-containing monomer units in the carboxyl group-containing liquid nitrile rubber is preferably 1 to 20 wt%, more preferably 2 to 15 wt%, still more preferably 3 to 10 wt%. Control of the content of the carboxyl group-containing monomer units within this range can enhance the solvent resistance and adhesiveness of an adhesive material prepared by compounding the liquid nitril rubber with an adhesive polymer such as a resin or a solid rubber.

Moreover, the carboxyl group-containing liquid nitrile rubber contained in the latex of a carboxyl group-containing liquid nitrile rubber used in the present invention is preferably prepared through copolymerization of the α,β-ethylenically unsaturated nitrile monomer and the carboxyl group-containing monomer with a conjugated diene monomer.

The conjugated diene monomer is preferably a conjugated diene monomer having 4 to 6 carbon atoms such as 1,3-butadiene, isoprene, 2,3-dimethyl-1,3-butadiene, 1,3-pentadiene, or chloroprene, more preferably 1,3-butadiene or isoprene, particularly preferably 1,3-butadiene. These conjugated diene monomers may be used alone or in combination.

The content of the conjugated diene monomer units in the carboxyl group-containing liquid nitrile rubber is preferably 40 to 89 wt%, more preferably 45 to 85 wt%, still more preferably 50 to 80 wt%. By controlling the content of the conjugated diene monomer units within this range, high oil resistance, heat-ageing resistance, and chemical stability can be obtained while favorable rubber elasticity is kept.

The carboxyl group-containing liquid nitrile rubber may also be a copolymerized product of the α,β-ethylenically unsaturated nitrile monomer, the carboxyl group-containing monomer, and the conjugated diene monomer with an additional monomer copolymerizable with these monomers. Examples of the additional monomer include ethylene, α-olefin monomers, aromatic vinyl monomers, α,β-ethylenically unsaturated carboxylic acid ester monomers (excluding those corresponding to the "carboxyl group-containing monomers" listed above), fluorinated vinyl monomers, copolymerizable antioxidants, and the like.

The α-olefin monomers are preferably those having 3 to 12 carbon atoms. Examples thereof include propylene, 1-butene, 4-methyl-1-pentene, 1-hexene, 1-octene, and the like.

Examples of the aromatic vinyl monomers include styrene, α-methylstyrene, vinylpyridine, and the like.

Examples of the α,β-ethylenically unsaturated carboxylic acid ester monomers include (meth)acrylic acid esters (abbreviations of "methacrylic acid esters and acrylate esters". The same is applied below.) having C₁ to C₁₈ alkyl groups such as methyl acrylate, ethyl acrylate, n-butyl acrylate, n-dodecyl acrylate, methyl methacrylate, and ethyl methacrylate; (meth)acrylic acid esters having C₂ to C₁₂ alkoxyalkyl groups such as methoxymethyl acrylate, methoxyethyl acrylate, and methoxyethyl methacrylate; (meth)acrylic acid esters having C₂ to C₁₂ cyanoalkyl groups such as α-cyanoethyl acrylate, α-cyanoethyl methacrylate, and α-cyanobutyl methacrylate; (meth)acrylic acid esters having C₁ to C₁₂ hydroxyalkyl groups such as 2-hydroxyethyl acrylate, 2-hydroxypropyl acrylate, and 2-hydroxyethyl methacrylate; (meth)acrylate esters having C₁ to C₁₂ fluoroalkyl groups such as trifluoroethyl acrylate and tetrafluoropropyl methacrylate; α,β-ethylenically unsaturated dicarboxylic acid dialkyl esters such as dimethyl maleate, dimethyl fumarate, dimethyl itaconate, and diethyl itaconate; dialkylamino group-containing α,β-ethylenically unsaturated carboxylic acid esters such as dimethylaminomethyl acrylate and diethylaminoethyl acrylate; and the like.

Examples of the fluorinated vinyl monomers include fluoroethyl vinyl ether, fluoropropyl vinyl ether, o-trifluoromethyl styrene, pentafluorovinyl benzoate, difluoroethylene, tetrafluoroethylene, and the like.

Examples of the copolymerizable antioxidants include N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, and the like.

These additional copolymerizable monomers may be used in combination. The content of the additional monomer units is preferably 50 wt% or less, more preferably 30 wt% or less, still more preferably 10 wt% or less relative to the total monomer units.

The latex of a carboxyl group-containing liquid nitrile rubber used in the present invention can be prepared by a method of copolymerizing the monomers described above by a known emulsion polymerization method or by a method of copolymerizing the monomers described above by a known solution polymerization method and then emulsifying the resulting solution. From the viewpoint of industrial productivity, a preferred method is emulsion polymerization. In emulsion polymerization, polymerization additives usually used can be used in addition to an emulsifier, a polymerization initiator, and a molecular weight modifier.

The emulsifier can be any emulsifier. Examples thereof include nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids such as myristic acid, palmitic acid, stearic acid, oleic acid, and linolenic acid, alkylbenzene sulfonic acid salts such as sodium dodecylbenzene sulfonate, polycondensates of naphthalene sulfonate and formalin, higher alcohol sulfuric acid ester salts, and alkyl sulfosuccinic acid salts; copolymerizable emulsifiers such as sulfo esters of α,β-unsaturated carboxylic acids, sulfate esters of α,β-unsaturated carboxylic acids, and sulfoalkylaryl ethers; and the like. The amount of the emulsifier to be added is preferably 0.1 to 10 parts by weight, more preferably 0.5 to 5 parts by weight relative to 100 parts by weight of the monomers used in the polymerization.

The polymerization initiator can be any radical initiator. Examples thereof include inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butylperoxy isobutyrate, and diisopropyl benzene hydroperoxide; azo compounds such as azobisisobutyronitrile, azobis-2,4-dimethylvaleronitrile, azobiscyclohexanecarbonitrile, and methyl azobisisobutyrate; and the like. These polymerization initiators can be used alone or in combination. The polymerization initiator is preferably an inorganic or organic peroxide. If a peroxide is used as the polymerization initiator, a combination thereof with a reducing agent such as sodium bisulfite, ferrous sulfate, or the like can also be used as a redox polymerization initiator. The amount of the polymerization initiator to be added is preferably 0.01 to 2 parts by weight relative to 100 parts by weight of the monomers used in the polymerization.

The molecular weight modifier can be any molecular weight modifier. Examples thereof include mercaptans such as t-dodecyl mercaptan, n-dodecyl mercaptan, and octyl mercaptan; halogenated hydrocarbons such as carbon tetrachloride, methylene chloride, and methylene bromide; α-methylstyrene dimers; sulfur-containing compounds such as tetraethylthiuram disulfide, dipentamethylenethiuram disulfide, and diisopropyl xanthogen disulfide; and the like. These can be used alone or in combination. Among these, mercaptans are preferred, and t-dodecyl mercaptan is more preferred. The amount of the molecular weight modifier to be added is preferably 8 to 15 parts by weight relative to 100 parts by weight of the monomers used in the polymerization.

For the medium (solvent) of emulsion polymerization, usually water is used. The amount of water is preferably 80 to 500 parts by weight, more preferably 80 to 300 parts by weight relative to 100 parts by weight of the monomers used in the polymerization.

In the emulsion polymerization, polymerization additives such as a stabilizer, a dispersant, a pH adjuster, a deoxidizer, and a particle size adjuster can be further used if necessary. If used, polymerization additives of any types can be used in any amounts.

Emulsion polymerization is preferably performed at a polymerization temperature of 0 to 70°C, more preferably 3 to 40°C. Control of the polymerization temperature during emulsion polymerization to such a low temperature suppresses a branching reaction, thereby reducing the viscosity of the resulting carboxyl group-containing liquid nitrile rubber before storage and further enhancing the stability during storage.

Furthermore, in emulsion polymerization, an additional portion of the polymerization initiator and/or the molecular weight modifier is preferably added at a stage where the polymerization conversion ratio reaches preferably 40 to 80%, more preferably 50 to 70%. Such an operation can appropriately enhance the final polymerization conversion ratio while appropriately suppressing an increase in viscosity of the resulting carboxyl group-containing liquid nitrile rubber before storage. The amount of the additional polymerization initiator to be added during the emulsion polymerization is preferably 0 to 100 parts by weight, more preferably 20 to 50 parts by weight where the amount of the polymerization initiator to be added at the start of polymerization is 100 parts by weight. The amount of the additional molecular weight modifier to be added during the emulsion polymerization is preferably 0 to 50 parts by weight, more preferably 0 to 25 parts by weight where the amount of the molecular weight modifier to be added at the start of polymerization is 100 parts by weight. At this time, the polymerization is preferably stopped when the polymerization conversion ratio reaches preferably 70 to 95%, more preferably 75 to 90%.

After the emulsion polymerization is performed according to the method above, a hydrogenation reaction for hydrogenating carbon-carbon double bonds in the resulting copolymer may be performed as needed. The hydrogenation reaction can be performed by use of any conventionally known method without limitation.

### <Method for producing carboxyl group-containing liquid nitrile rubber>

A method for producing a carboxyl group-containing liquid nitrile rubber according to the present invention will now be described.

The method for producing a carboxyl group-containing liquid nitrile rubber according to the present invention comprises bringing a latex of a carboxyl group-containing liquid nitrile rubber into contact with a mono- or divalent metal salt under a condition at a pH of 5 or less (namely, the pH during the salting-out operation is 5 or less) to salt out and separate the carboxyl group-containing liquid nitrile rubber from an aqueous phase.

In the production method according to the present invention, examples of the method of bringing a latex of a carboxyl group-containing liquid nitrile rubber into contact with a mono- or divalent metal salt include, but should not be limited to, a method of mixing an aqueous solution containing a mono- or divalent metal salt with the latex of a carboxyl group-containing liquid nitrile rubber, and the like. Although (α) a method of adding the latex of a carboxyl group-containing liquid nitrile rubber to the aqueous solution containing a mono- or divalent metal salt, followed by mixing or (β) a method of adding the aqueous solution containing a mono- or divalent metal salt to the latex of a carboxyl group-containing liquid nitrile rubber may be used in the above operation, the method (β) is preferred.

In the production method according to the present invention, the latex of a carboxyl group-containing liquid nitrile rubber is brought into contact with the mono- or divalent metal salt under a condition at a pH of 5 or less. According to the production method according to the present invention, use of such a step can provide a carboxyl group-containing liquid nitrile rubber which has high stability during storage and can ensure the ability to provide high surface smoothness for an adhesive material prepared by mixing with an adhesive polymer. In the production method according to the present invention, the latex of a carboxyl group-containing liquid nitrile rubber and the mono- or divalent metal salt may be brought into contact with each other under a condition where the mixture thereof prepared by contacting of these materials has a pH (i.e., the pH during the salting-out operation) of 5 or less. For example, in the case where the mono- or divalent metal salt in the form of an aqueous solution is mixed with the latex of a carboxyl group-containing liquid nitrile rubber, preferred is use of a method of adjusting the pH of the aqueous solution of the mono- or divalent metal salt such that the pH of the mixture of these materials (i.e., the pH during the salting-out operation) is 5 or less.

In the production method according to the present invention, the latex of a carboxyl group-containing liquid nitrile rubber is brought into contact with the mono- or divalent metal salt under a condition at a pH of 5 or less. The pH at this time (i.e., the pH during the salting-out operation) is preferably 1 to 4.5, more preferably 1.5 to 4, still more preferably 1.5 to 3. A significantly high pH unintentionally reduces the stability during storage of the resulting carboxyl group-containing liquid nitrile rubber, and thus cannot ensure the ability to provide high surface smoothness for the resulting adhesive material prepared by mixing with an adhesive polymer.

The mono- or divalent metal salt may be any salt containing a metal which is converted into a mono- or divalent metal ion when dissolved in water. Examples of such a salt include, but should not be limited to, salts of inorganic acids selected from hydrochloric acid, nitric acid, and sulfuric acid or organic acids such as acetic acid with a metal selected from sodium, potassium, lithium, magnesium, calcium, zinc, nickel, and tin.

The mono- or divalent metal salt is preferably a mono- or divalent metal salt of an inorganic acid. Specific examples of the mono- or divalent metal salt of an inorganic acid include metal chlorides such as sodium chloride, potassium chloride, lithium chloride, magnesium chloride, calcium chloride, zinc chloride, nickel chloride, and tin chloride; salts of nitric acid such as sodium nitrate, potassium nitrate, lithium nitrate, magnesium nitrate, calcium nitrate, zinc nitrate, nickel nitrate, and tin nitrate; salts of sulfuric acid such as sodium sulfate, potassium sulfate, lithium sulfate, magnesium sulfate, calcium sulfate, zinc sulfate, nickel sulfate, and tin sulfate; and the like. Among these, preferred are sodium salts of inorganic acids, calcium salts of inorganic acids, and magnesium salts of inorganic acids, preferred are calcium chloride, sodium chloride, magnesium sulfate, and sodium sulfate, and particularly preferred is calcium chloride. Although these mono- or divalent metal salts can be used alone or in combination, use of at least one divalent metal salt is preferred.

The amount of the monovalent metal salt to be used is preferably 10 to 1000 parts by weight, more preferably 30 to 500 parts by weight, still more preferably 50 to 200 parts by weight relative to 100 parts by weight of the carboxyl group-containing liquid nitrile rubber contained in the latex of a carboxyl group-containing liquid nitrile rubber. The amount of the divalent metal salt to be used is preferably 1 to 10 parts by weight, more preferably 2 to 8 parts by weight, still more preferably 2.5 to 5 parts by weight relative to 100 parts by weight of the carboxyl group-containing liquid nitrile rubber contained in the latex of a carboxyl group-containing liquid nitrile rubber. The carboxyl group-containing liquid nitrile rubber can be more efficiently salted out by controlling the amount of the mono- or divalent metal salt to be used within this range.

Although any temperature condition for bringing the latex of a carboxyl group-containing liquid nitrile rubber into contact with the mono- or divalent metal salt can be used without limitation, the temperature is preferably 10 to 100°C, more preferably 20 to 90°C. The temperature in contacting of these materials can be controlled by controlling the temperature of the latex of a carboxyl group-containing liquid nitrile rubber or the temperature of the mono- or divalent metal salt if the mono- or divalent metal salt is used in the form of an aqueous solution. The content of the mono- or divalent metal salt is preferably 1 to 10 wt%, more preferably 2 to 5 wt% if an aqueous solution of the mono- or divalent metal salt is used.

In the production method according to the present invention, as described above, the carboxyl group-containing liquid nitrile rubber can be obtained as follows: The carboxyl group-containing liquid nitrile rubber is salted out and separated from an aqueous phase by bringing the latex of the carboxyl group-containing liquid nitrile rubber into contact with the mono- or divalent metal salt under the condition at a pH of 5 or less, and is washed with water as needed. Thereafter, the aqueous phase is removed by evaporation or by vacuum drying. Because the latex is separated into an oil layer made of the carboxyl group-containing liquid nitrile rubber and an aqueous layer after salting out and washing in the above operation, a method of removing the aqueous layer through an operation to discharge the aqueous layer from the vessel and then completely removing moisture by evaporation or by vacuum drying may be used.

Although not particularly limited, the carboxyl group-containing liquid nitrile rubber produced by the production method according to the present invention has a weight average molecular weight (Mw) of preferably 1000 to 50000, more preferably 3000 to 20000. The carboxyl group-containing liquid nitrile rubber produced by the production method according to the present invention has a viscosity at 70°C of preferably 2000 to 12000 mPa·s, more preferably 3000 to 10000 mPa·s, still more preferably 3500 to 6800 mPa·s. The viscosity at 70°C of the carboxyl group-containing liquid nitrile rubber can be determined using a tuning fork vibration viscometer according to JIS Z8803.

As described above, the carboxyl group-containing liquid nitrile rubber can be obtained by the production method according to the present invention. The carboxyl group-containing liquid nitrile rubber obtained by the production method according to the present invention has high stability during storage. For this reason, the carboxyl group-containing liquid nitrile rubber obtained by the production method according to the present invention can demonstrate stable properties when used as a mixture with a resin or a solid rubber in a variety of applications to adhesive materials, friction materials, brake materials, and the like, and thus can be suitably used in these applications. In particular, because in addition to high stability during storage, the carboxyl group-containing liquid nitrile rubber obtained by the production method according to the present invention can ensure the ability to provide high surface smoothness for an adhesive material prepared by mixing with an adhesive polymer, the carboxyl group-containing liquid nitrile rubber can be particularly suitably used as an adhesive material (especially, an adhesive material for a flexible print circuit substrate) among these applications by compounding the carboxyl group-containing liquid nitrile rubber with an adhesive polymer such as an adhesive resin or another rubber.

The carboxyl group-containing liquid nitrile rubber can be combined with any resin or any solid rubber without limitation. Examples thereof include solid rubbers such as acrylonitrile butadiene rubber, styrene butadiene rubber, butadiene rubber, isoprene rubber, acrylic rubber, ethylene propylene rubber, urethane rubber, fluorocarbon rubber, and silicon rubber; thermoplastic elastomer materials such as styrene isoprene styrene block copolymers, styrene butadiene styrene block copolymers, and styrene ethylene butadiene styrene block copolymers; resin materials such as PMMA, polyethylene, polypropylene, polystyrene, polycarbonate, ABS, vinyl chloride, and PET; photo- or heat-curable resins such as epoxy resins, urethane resins, and heat-/photo-curable acrylate resins; and the like.

### Examples

Hereinafter, the present invention will be more specifically described by way of Examples and Comparative Examples. In Examples, the term "parts" is weight-based unless otherwise specified.

A variety of physical properties were evaluated according to the methods described below.

### [Viscosity of carboxyl group-containing liquid nitrile rubber]

The viscosity of the carboxyl group-containing liquid nitrile rubber was measured at 70°C according to JIS Z8803 using a tuning fork vibration viscometer (product name "SV-10", available from A&D Company, Limited). In the measurement, a 20.2 g sample was taken, a glass cell (product name "AX-SV-35", available from A&D Company, Limited) was used to place the sample therein, and a circulating water jacket for the glass cell (product name "AX-SV-37", available from A&D Company, Limited) was used. A product name "RsVisco" (available from A&D Company, Limited) was used as software for analyzing the results of measurement.

### [Viscosity of carboxyl group-containing liquid nitrile rubber after stored at 40°C for one week]

The carboxyl group-containing liquid nitrile rubber was stored under a condition at a temperature of 40°C for one week. The viscosity of the carboxyl group-containing liquid nitrile rubber after stored was measured by the same method as above.

### [Evaluation of surface smoothness]

100 Parts of bisphenol A epoxy resin (product name "jER (registered trademark) 828EL", available from Mitsubishi Chemical Corporation) and 30 parts of 4,4'-diaminodiphenylsulfone (available from Tokyo Chemical Industry Co., Ltd.) as a curing agent were mixed with 50 parts of the carboxyl group-containing liquid nitrile rubber to prepare an adhesive composition. The adhesive composition was dissolved and dispersed in methyl ethyl ketone to prepare an adhesive solution containing 30 mass% solids. The resulting adhesive solution was applied to one surface of a polyimide film having a thickness of 25 µm to have a dry thickness of 30 to 40 µm, followed by drying at 150°C for 20 minutes to prepare a coverlay film.

The resulting coverlay film was bonded to the copper foil surface (wiring-patterned surface) of a copper clad laminate having a predetermined wiring pattern (copper clad laminate formed of a wiring pattern made of a copper foil having a thickness of 35 µm and a polyimide base film having a thickness of 25 µm) by pressing at a temperature 200°C and a pressure of 100 kg/cm² for 3 minutes. The surface smoothness of the coverlay film at this time was evaluated. The surface smoothness was evaluated according to the following criteria. Using a laser displacement meter, the surface smoothness was determined based on two ranks as below. The determination was performed on five samples for each rubber.
A: All the five samples have recesses and projections with a height of less than 8 µm.
F: At least one sample of the five samples has recesses and projections with a height of 8 µm or more.

### [Polymerization conversion ratio]

In order to terminate polymerization, an appropriate amount of a polymerization terminator was added to a polymerization reaction liquid in the course of the reaction. The total solids content of the resulting polymerization reaction solution was determined according to JIS K 6387-2:2011. Thereafter, the total solids content of the additives, i.e., sodium dodecylbenzene sulfonate as an emulsifier, sodium sulfate, a molecular weight modifier, and a polymerization initiator was subtracted from the total solids content, and the corrected total solids content [(total solids content) - (solids content of additives)], which was equivalent to the remainder of subtraction of the weight of an unreacted monomer mixture from the total weight of the monomer mixture used in the polymerization, was divided by the total weight of the monomer mixture used in the polymerization to calculate the polymerization conversion ratio. To be noted, the polymerization additives other than those described above were not considered in this calculation because of their small contribution.

### <Production Example 1, production of latex (A-1) of carboxyl group-containing liquid nitrile rubber>

30 Parts of a 10 wt% aqueous solution of sodium dodecylbenzene sulfonate (emulsifier), 0.5 parts of sodium hydroxide, 10 parts of a 10 wt% aqueous solution of a sodium salt with a naphthalene sulfonate formalin condensate, 0.2 parts of sodium sulfate, 0.02 parts of sulfuric acid, and 200 parts of deionized water were placed into a reaction container having an inner volume of 10 liter, and 24 parts of acrylonitrile, 8 parts of methacrylic acid, and 10 parts of t-dodecyl mercaptan (TDM) (molecular weight modifier, trade name "Sulfole 120", available from Chevron Phillips Chemical Company, LLC) were added thereto. The gas inside the reaction container was then purged with nitrogen three times, and the reaction container was kept at 5°C. After 68 parts of 1,3-butadiene and appropriate amounts of a reducing agent and a chelating agent were added, 0.12 parts of diisopropylbenzene hydroperoxide (polymerization initiator) was charged thereinto to start a polymerization reaction. Thereafter, the polymerization reaction was continued according to the method described above while the polymerization conversion ratio was being monitored. When the polymerization conversion ratio reached 55%, 2 parts of t-dodecyl mercaptan (TDM), 0.05 parts of diisopropylbenzene hydroperoxide (polymerization initiator), and an appropriate amount of the reducing agent were added to further continue the polymerization reaction. When the polymerization conversion ratio reached 85%, 1 part of a 5 wt% aqueous solution of sodium nitrite (polymerization terminator) was added to terminate the polymerization reaction. In the next step, a 10% aqueous solution containing 0.5 parts of 2,5-di-t-amylhydroquinone dispersed by 0.1 parts of sodium alkylbenzene sulfonate (product name "Tayca Power LN2450", available from Tayca Corporation) was added relative to 100 parts of the polymer in the latex. Thereafter, the resulting product was heated to 70°C, and residual monomers were recovered under reduced pressure at 70°C through steam distillation. Subsequently, 1.5 parts of dibutylhydroxytoluene as an antioxidant was added relative to 100 parts of the polymer in the latex to yield a latex (A-1) of a carboxyl group-containing liquid nitrile rubber. The resulting latex (A-1) of a carboxyl group-containing liquid nitrile rubber had a pH of 2.5, and the carboxyl group-containing liquid nitrile rubber consisted of 25 wt% of acrylonitrile units, 67 wt% of 1,3-butadiene units, and 8 wt% of methacrylic acid units. The carboxyl group-containing liquid nitrile rubber contained in the latex (A-1) of a carboxyl group-containing liquid nitrile rubber was liquid at 25°C. Measurement of the Mooney viscosity according to JIS K6300 showed that its viscosity was significantly low and the Mooney viscosity was unmeasurable.

### <Production Example 2, production of latex (A-2) of carboxyl group-containing liquid nitrile rubber>

30 Parts of a 10 wt% aqueous solution of sodium dodecylbenzene sulfonate (emulsifier), 0.5 parts of sodium hydroxide, 10 parts of a 10 wt% aqueous solution of a sodium salt with a naphthalene sulfonate formalin condensate, 0.2 parts of sodium sulfate, 0.02 parts of sulfuric acid, and 200 parts of deionized water were placed into a reaction container having an inner volume of 10 liter, and 33 parts of acrylonitrile, 4 parts of methacrylic acid, and 12 parts of t-dodecyl mercaptan (TDM) (molecular weight modifier, trade name "Sulfole 120", available from Chevron Phillips Chemical Company, LLC) were added thereto. The gas inside the reaction container was then purged with nitrogen three times, and the reaction container was kept at 10°C. After 63 parts of 1,3-butadiene and appropriate amounts of a reducing agent and a chelating agent were added, 0.12 parts of diisopropylbenzene hydroperoxide (polymerization initiator) was charged thereinto to start a polymerization reaction. Thereafter, the polymerization reaction was continued according to the method described above while the polymerization conversion ratio was being monitored. When the polymerization conversion ratio reached 55%, 0.05 parts of diisopropylbenzene hydroperoxide (polymerization initiator) and an appropriate amount of the reducing agent were added to further continue the polymerization reaction. When the polymerization conversion ratio reached 80%, 1 part of a 5 wt% aqueous solution of sodium nitrite (polymerization terminator) was added to terminate the polymerization reaction. In the next step, a 10% aqueous solution containing 0.5 parts of 2,5-di-t-amylhydroquinone dispersed by 0.1 parts of alkylbenzene sulfonate sodium (product name "Tayca Power LN2450", available from Tayca Corporation) was added relative to 100 parts of the polymer in the latex. Thereafter, the resulting product was heated to 70°C, and residual monomers were recovered under reduced pressure at 70°C through steam distillation. Subsequently, 1.5 parts of dibutylhydroxytoluene as an antioxidant was added relative to 100 parts of the polymer in the latex to yield a latex (A-2) of a carboxyl group-containing liquid nitrile rubber. The resulting latex (A-2) of a carboxyl group-containing liquid nitrile rubber had a pH of 3, and the carboxyl group-containing liquid nitrile rubber consisted of 34 wt% of acrylonitrile units, 61 wt% of 1,3-butadiene units, and 5 wt% of methacrylic acid units. The carboxyl group-containing liquid nitrile rubber contained in the latex (A-2) of a carboxyl group-containing liquid nitrile rubber was liquid at 25°C. Measurement of the Mooney viscosity according to JIS K6300 showed that its viscosity was significantly low and the Mooney viscosity was unmeasurable.

### <Example 1>

A 2.5 wt% calcium chloride aqueous solution was prepared, and the pH was adjusted to 2 by adding hydrochloric acid. While the latex (A-1) of a carboxyl group-containing liquid nitrile rubber prepared in Production Example 1 was being stirred at 80°C, the calcium chloride aqueous solution having the pH adjusted to 2 was added to and mixed with the latex to salt out the carboxyl group-containing liquid nitrile rubber and separate the latex into an oil layer of the carboxyl group-containing liquid nitrile rubber and an aqueous layer. The calcium chloride aqueous solution having the pH adjusted to 2 was added in a calcium chloride amount of 3.5 parts relative to 100 parts of the carboxyl group-containing liquid nitrile rubber contained in the latex (A-1) of a carboxyl group-containing liquid nitrile rubber. The pH of the mixture at this time (i.e., the pH during the salting-out operation) was 2.

In the next step, the aqueous layer was removed, and 100 parts of deionized water was added relative to 100 parts of the carboxyl group-containing liquid nitrile rubber under stirring, followed by mixing at 60°C for 10 minutes. The aqueous layer was then removed. This washing operation was repeated two times, and then moisture was volatilized with an evaporator under a condition at 110°C and -80 kPa (gauge pressure) to obtain a carboxyl group-containing liquid nitrile rubber. Using the resulting carboxyl group-containing liquid nitrile rubber, the viscosities (before storage and after storage at 40°C for one week) were measured, and the surface smoothness was evaluated. The results are shown in Table 1.

### <Example 2>

Salting-out of the carboxyl group-containing liquid nitrile rubber was performed in the same manner as in Example 1 except that the calcium chloride aqueous solution having the pH adjusted to 2 was replaced with a calcium chloride aqueous solution having the pH adjusted to 4.5, and then washing with water and the operation to volatilize moisture were performed in the same manner as in Example 1 to obtain a carboxyl group-containing liquid nitrile rubber. The measurement and the evaluation were performed in the same manner as above. The results are shown in Table 1. In Example 2, the pH during the salting-out operation was 4.

### <Example 3>

Salting-out of the carboxyl group-containing liquid nitrile rubber was performed in the same manner as in Example 1 except that the latex (A-1) of a carboxyl group-containing liquid nitrile rubber obtained in Production Example 1 was replaced with the latex (A-2) of a carboxyl group-containing liquid nitrile rubber obtained in Production Example 2, and then washing with water and the operation to volatilize moisture were performed in the same manner as in Example 1 to obtain a carboxyl group-containing liquid nitrile rubber. The measurement and the evaluation were performed in the same manner as above. The results are shown in Table 1. In Example 3, the pH during the salting-out operation was 2.5.

### <Example 4>

Salting-out of the carboxyl group-containing liquid nitrile rubber was performed in the same manner as in Example 3 except that the calcium chloride aqueous solution having the pH adjusted to 2 was replaced with a calcium chloride aqueous solution having the pH adjusted to 4, and then washing with water and the operation to volatilize moisture were performed in the same manner as in Example 3 to obtain a carboxyl group-containing liquid nitrile rubber. The measurement and the evaluation were performed in the same manner as above. The results are shown in Table 1. In Example 4, the pH during the salting-out operation was 4.

### <Comparative Example 1>

Salting-out of the carboxyl group-containing liquid nitrile rubber was performed in the same manner as in Example 1 except that the calcium chloride aqueous solution having the pH adjusted to 2 was replaced with a calcium chloride aqueous solution having the pH adjusted to 7, and then washing with water and the operation to volatilize moisture were performed in the same manner as in Example 1 to obtain a carboxyl group-containing liquid nitrile rubber. The measurement and the evaluation were performed in the same manner as above. The results are shown in Table 1. In Comparative Example 1, the pH during the salting-out operation was 6.

### <Comparative Example 2>

Salting-out of the carboxyl group-containing liquid nitrile rubber was performed in the same manner as in Example 1 except that the calcium chloride aqueous solution having the pH adjusted to 2 was replaced with a calcium chloride aqueous solution having the pH adjusted to 10 with sodium hydroxide, and then washing with water and the operation to volatilize moisture were performed in the same manner as in Example 1 to obtain a carboxyl group-containing liquid nitrile rubber. The measurement and the evaluation were performed in the same manner as above. The results are shown in Table 1. In Comparative Example 2, the pH during the salting-out operation was 8.

### <Comparative Example 3>

A 2.5 wt% aluminum sulfate aqueous solution was prepared, and the pH was adjusted to 2 by adding hydrochloric acid. Thereafter, salting-out of the carboxyl group-containing liquid nitrile rubber was performed in the same manner as in Example 1 except that the calcium chloride aqueous solution having the pH adjusted to 2 was replaced with the resulting aluminum sulfate aqueous solution having a pH of 2 and the amount thereof used was changed that the amount of aluminum sulfate was 2 parts relative to 100 parts of the carboxyl group-containing liquid nitrile rubber in the latex (A-1) of a carboxyl group-containing liquid nitrile rubber, and then washing with water and the operation to volatilize moisture were performed in the same manner as in Example 1 to obtain a carboxyl group-containing liquid nitrile rubber. The measurement and the evaluation were performed in the same manner as above. The results are shown in Table 1. In Comparative Example 3, the pH during the salting-out operation was 2.

### [Table 1]

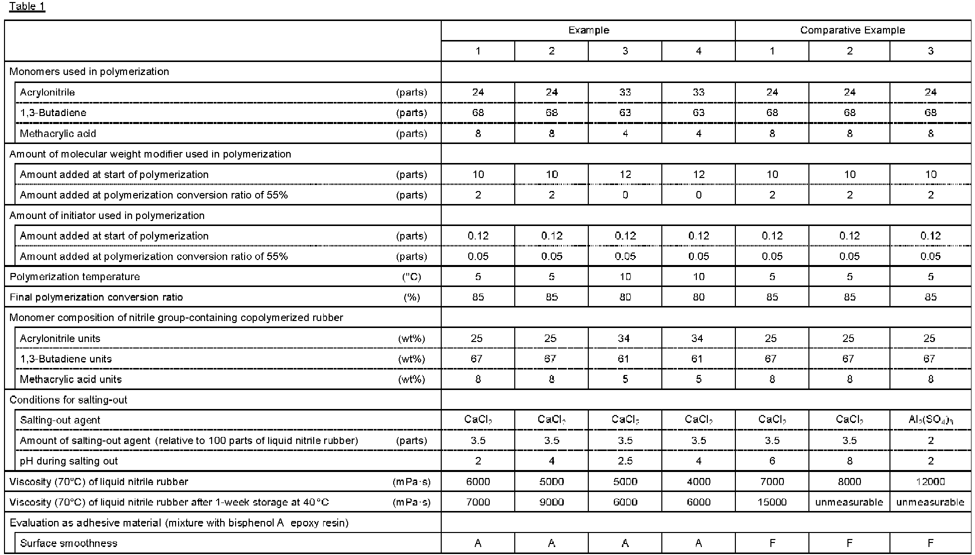

In Comparative Examples 2 and 3, the viscosity after storage at 40°C for one week was significantly increased, and was unmeasurable.

Apparently from Table 1, in the cases where the process of bringing the latex of a carboxyl group-containing liquid nitrile rubber into contact with a mono- or divalent metal salt under a condition at a pH of 5 or less to salt out and separate the carboxyl group-containing liquid nitrile rubber from the aqueous phase is used, an increase in viscosity after storage at 40°C for one week was suppressed and high stability after storage was demonstrated in the resulting carboxyl group-containing liquid nitrile rubbers. In addition to this, high surface smoothness was demonstrated in adhesive materials prepared by mixing these carboxyl group-containing liquid nitrile rubbers with an adhesive polymer (Examples 1 to 4).

In contrast, in the case where the latex of the carboxyl group-containing liquid nitrile rubber was subjected to salting-out under a condition at a pH of more than 5 or in the case where the mono- or divalent metal salt was replaced with aluminum sulfate, which is a trivalent metal salt, the viscosity after storage at 40°C for one week was significantly increased and poor stability during storage was demonstrated in the resulting carboxyl group-containing liquid nitrile rubbers. In addition to this, low surface smoothness was demonstrated in adhesive materials prepared by mixing these carboxyl group-containing liquid nitrile rubbers with an adhesive polymer (Comparative Examples 1 to 3).

## Claims

1. A method for producing a carboxyl group-containing liquid nitrile rubber, the method comprising:
bringing a latex of a carboxyl group-containing liquid nitrile rubber into contact with a mono- or divalent metal salt under a condition at a pH of 5 or less to salt out and separate the carboxyl group-containing liquid nitrile rubber from an aqueous phase,
wherein a mixture prepared by contacting of the latex of the carboxyl group-containing liquid nitrile rubber and the mono- or divalent metal salt has a pH of 5 or less.

2. The method for producing a carboxyl group-containing liquid nitrile rubber according to claim 1,
wherein the carboxyl group-containing liquid nitrile rubber contains 1 to 20 wt% of carboxyl group-containing monomer units.

3. The method for producing a carboxyl group-containing liquid nitrile rubber according to claim 2,
wherein the carboxyl group-containing liquid nitrile rubber contains 10 to 59 wt% of α,β-ethylenically unsaturated nitrile monomer units.

4. The method for producing a carboxyl group-containing liquid nitrile rubber according to claim 2 or 3,
wherein the carboxyl group-containing liquid nitrile rubber contains 40 to 89 wt% of conjugated diene monomer units.

5. The method for producing a carboxyl group-containing liquid nitrile rubber according to any one of claims 1 to 4,
wherein the mono- or divalent metal salt is a mono- or divalent metal salt of an inorganic acid.

6. The method for producing a carboxyl group-containing liquid nitrile rubber according to any one of claims 1 to 5,
wherein the mono- or divalent metal salt is a divalent metal salt, and
the amount of the divalent metal salt to be used is 1 to 10 parts by weight relative to 100 parts by weight of the carboxyl group-containing liquid nitrile rubber contained in the latex of a carboxyl group-containing liquid nitrile rubber.

7. The method for producing a carboxyl group-containing liquid nitrile rubber according to any one of claims 1 to 6,
wherein the carboxyl group-containing liquid nitrile rubber is salted out by bringing the latex of a carboxyl group-containing liquid nitrile rubber into contact with an aqueous solution containing the mono- or divalent metal salt under the condition at a pH of 5 or less.

8. The method for producing a carboxyl group-containing liquid nitrile rubber according to claim 7,
wherein the content of the mono- or divalent metal salt in the aqueous solution containing the mono- or divalent metal salt is 1 to 10 wt%.

## Patentansprüche

1. Verfahren zur Herstellung eines carboxylgruppen-haltigen flüssigen Nitrilkautschuks, wobei das Verfahren umfasst:
Inkontaktbringen eines Latex eines carboxylgruppenhaltigen flüssigen Nitrilkautschuks mit einem ein- oder zweiwertigen Metallsalz unter einer Bedingung bei einem pH-Wert von 5 oder weniger, um den carboxylgruppenhaltigen flüssigen Nitrilkautschuk auszusalzen und von einer wässrigen Phase zu trennen,
wobei ein Gemisch, das durch Inkontaktbringen des Latex des Carboxylgruppen-haltigen flüssigen Nitrilkautschuks und des ein- oder zweiwertigen Metallsalzes hergestellt wird, einen pH-Wert von 5 oder weniger aufweist.

2. Verfahren zur Herstellung eines carboxylgruppen-haltigen flüssigen Nitrilkautschuks nach Anspruch 1,
wobei der carboxylgruppenhaltige flüssige Nitrilkautschuk 1 bis 20 Gew.-% carboxylgruppenhaltige Monomereinheiten enthält.

3. Verfahren zur Herstellung eines carboxylgruppen-haltigen flüssigen Nitrilkautschuks nach Anspruch 2,
wobei der carboxylgruppenhaltige flüssige Nitrilkautschuk 10 bis 59 Gew.-% an α,β-ethylenisch ungesättigten Nitrilmonomereinheiten enthält.

4. Verfahren zur Herstellung eines carboxylgruppen-haltigen flüssigen Nitrilkautschuks nach Anspruch 2 oder 3,
wobei der carboxylgruppenhaltige flüssige Nitrilkautschuk 40 bis 89 Gew.-% an konjugierten Dienmonomereinheiten enthält.

5. Verfahren zur Herstellung eines carboxylgruppen-haltigen flüssigen Nitrilkautschuks nach einem der Ansprüche 1 bis 4,
wobei das ein- oder zweiwertige Metallsalz ein ein- oder zweiwertiges Metallsalz einer anorganischen Säure ist.

6. Verfahren zur Herstellung eines carboxylgruppen-haltigen flüssigen Nitrilkautschuks nach einem der Ansprüche 1 bis 5,
wobei das ein- oder zweiwertige Metallsalz ein zweiwertiges Metallsalz ist, und
die Menge des zu verwendenden zweiwertigen Metallsalzes 1 bis 10 Gewichtsteile, bezogen auf 100 Gewichtsteile des carboxylgruppenhaltigen flüssigen Nitrilkautschuks, der im Latex eines carboxylgruppenhaltigen flüssigen Nitrilkautschuks enthalten ist, beträgt.

7. Verfahren zur Herstellung eines carboxylgruppen-haltigen flüssigen Nitrilkautschuks nach einem der Ansprüche 1 bis 6,
wobei der carboxylgruppenhaltige flüssige Nitrilkautschuk ausgesalzen wird, indem der Latex eines carboxylgruppenhaltigen flüssigen Nitrilkautschuks mit einer wässrigen Lösung, die das ein- oder zweiwertige Metallsalz enthält, unter einer Bedingung bei einem pH-Wert von 5 oder weniger in Kontakt gebracht wird.

8. Verfahren zur Herstellung eines carboxylgruppen-haltigen flüssigen Nitrilkautschuks nach Anspruch 7,
wobei der Gehalt des ein- oder zweiwertigen Metallsalzes in der wässrigen Lösung, die das ein- oder zweiwertige Metallsalz enthält, 1 bis 10 Gew.-% beträgt.

## Revendications

1. Procédé de production d'un caoutchouc nitrile liquide contenant un groupe carboxyle, le procédé comprenant :
la mise en contact d'un latex d'un caoutchouc nitrile liquide contenant un groupe carboxyle avec un sel métallique mono- ou divalent dans des conditions de pH inférieur ou égal à 5 pour faire précipiter par ajout d'un sel et séparer le caoutchouc nitrile liquide contenant un groupe carboxyle d'une phase aqueuse,
dans lequel un mélange préparé par mise en contact du latex de caoutchouc nitrile liquide contenant un groupe carboxyle et du sel métallique mono- ou divalent a un pH inférieur ou égal à 5.

2. Procédé de production d'un caoutchouc nitrile liquide contenant un groupe carboxyle selon la revendication 1,
dans lequel le caoutchouc nitrile liquide contenant un groupe carboxyle contient de 1 à 20 % en poids de motifs monomères contenant un groupe carboxyle.

3. Procédé de production d'un caoutchouc nitrile liquide contenant un groupe carboxyle selon la revendication 2,
dans lequel le caoutchouc nitrile liquide contenant un groupe carboxyle contient de 10 à 59 % en poids de motifs monomères nitriles à insaturation α,β-éthylénique.

4. Procédé de production d'un caoutchouc nitrile liquide contenant un groupe carboxyle selon la revendication 2 ou 3,
dans lequel le caoutchouc nitrile liquide contenant un groupe carboxyle contient de 40 à 89 % en poids de motifs monomères diènes conjugués.

5. Procédé de production d'un caoutchouc nitrile liquide contenant un groupe carboxyle selon l'une quelconque des revendications 1 à 4,
dans lequel le sel métallique mono- ou divalent est un sel métallique mono- ou divalent d'un acide inorganique.

6. Procédé de production d'un caoutchouc nitrile liquide contenant un groupe carboxyle selon l'une quelconque des revendications 1 à 5,
dans lequel le sel métallique mono- ou divalent est un sel métallique divalent, et
la quantité de sel métallique divalent à utiliser est de 1 à 10 parties en poids pour 100 parties en poids du caoutchouc nitrile liquide contenant un groupe carboxyle contenu dans le latex d'un caoutchouc nitrile liquide contenant un groupe carboxyle.

7. Procédé de production d'un caoutchouc nitrile liquide contenant un groupe carboxyle selon l'une quelconque des revendications 1 à 6,
dans lequel le caoutchouc nitrile liquide contenant un groupe carboxyle est précipité par ajout d'un sel en mettant en contact le latex d'un caoutchouc nitrile liquide contenant un groupe carboxyle avec une solution aqueuse contenant le sel métallique mono- ou divalent dans des conditions de pH inférieur ou égal à 5.

8. Procédé de production d'un caoutchouc nitrile liquide contenant un groupe carboxyle selon la revendication 7,
dans lequel la teneur en sel métallique mono- ou divalent dans la solution aqueuse contenant le sel métallique mono- ou divalent est de 1 à 10 % en poids.
